# FASCICULE DE BREVET EUROPEEN

(11) **EP 2 544 800 B1**
(45) Date de publication et mention de la délivrance du brevet: **26.06.2019**
(21) Numéro de dépôt: 11711678.0
(22) Date de dépôt: 09.03.2011
(51) Int. Cl.: B01D 61/10, B01D 61/20, B01D 61/08, B01D 61/18

(54) **ÉQUIPEMENT DE FILTRATION COMPORTANT DES MODULES DE FILTRATION MEMBRANAIRES ET ASSEMBLAGE DE MODULES POUR UN TEL ÉQUIPEMENT**
FILTRIERVORRICHTUNG MIT MEMBRANFILTRIERMODULEN UND MODULANORDNUNG FÜR EINE DERARTIGE VORRICHTUNG
FILTERING DEVICE COMPRISING MEMBRANE FILTERING MODULES AND ASSEMBLY OF MODULES FOR SUCH A DEVICE

(30) Priorité: 11.03.2010 FR 1000979; 11.03.2010 FR 1000978
(43) Date de publication de la demande: 16.01.2013
(73) Titulaire: Degrémont, 92040 Paris La Défense (FR)
(72) Inventeur: MIRAULT, Frédéric, F-78580 Maule (FR)
(74) Mandataire: IPAZ
(86) Numéro de dépôt international: PCT/IB2011/050981
(87) Numéro de publication internationale: WO 2011/111003

(56) Documents cités:
- EP-A1- 1 078 679
- EP-A1- 1 897 602
- WO-A1-2008/071516
- FR-A1- 2 912 321
- JP-A- 2001 321 642
- JP-A- 2003 334 429

## Description

L'invention concerne le domaine de la conception et de la réalisation de systèmes de filtration membranaires pour des liquides, plus particulièrement pour des eaux destinées à la consommation, aux applications industrielles, aux traitements résiduaires et à la réutilisation, ces systèmes mettant en oeuvre des modules d'ultrafiltration et de microfiltration.

Les systèmes de filtration membranaires en ultrafiltration et microfiltration utilisent des modules comprenant :
- une enveloppe extérieure positionnée verticalement,
- une ou plusieurs membranes situées à l'intérieur de l'enveloppe ;
- trois ou quatre piquages pour : l'alimentation des modules ; la sortie de l'eau filtrée appelée « filtrat » ; la sortie rétrolavage appelée « rétentat » ; et la vidange du module.

Les caractéristiques d'un module peuvent varier d'un constructeur à l'autre. L'enveloppe peut être plus ou moins longue et le diamètre différent. Les membranes peuvent être du type à fibres creuses, de diamètre et de nombre différents, entraînant une surface membranaire variable. Le positionnement, le type et le diamètre des piquages sont également variables suivant les constructeurs.

Les modules sont mis en oeuvre sous forme d'un assemblage dans lequel ils sont installés verticalement selon au moins une rangée, les modules de chaque rangée ayant leurs axes verticaux parallèles situés dans un même plan, chaque module comportant en partie inférieure un piquage axial d'alimentation en liquide à traiter, notamment de l'eau, et en partie supérieure, un piquage axial supérieur pour filtrat ou rétentat, et un piquage latéral pour rétentat ou filtrat, ledit assemblage comportant au moins un collecteur d'alimentation, un collecteur de filtrat, et un collecteur de rétentat fixés sur un châssis, et un moyen de support des modules.

Lorsqu'un module de l'assemblage ne remplit plus sa fonction correctement il devient nécessaire de le remplacer. Pour ce remplacement il est possible que l'on souhaite mettre en place un module différent de celui qui est retiré, en particulier un module de longueur différente.

L'invention a pour but, surtout, de fournir un équipement de filtration qui permet de remplacer aisément et rapidement les modules et/ou les assemblages de modules, sans être limité à un type de module déterminé.

Selon l'invention, un équipement de filtration de liquide, notamment d'eau, comportant des modules de filtration membranaires, installés verticalement selon au moins une rangée, les modules ayant leurs axes géométriques verticaux parallèles situés dans un même plan, lesdits modules étant reliés par des tuyauteries à des vannes pour contrôler les flux de liquide allant vers les modules et en provenant,
l'équipement de filtration de liquide comprenant :
- un premier bloc formé par un assemblage de modules de filtration membranaires, chaque module comportant :
   - un piquage axial inférieur pour l'alimentation en liquide à traiter,
   - un piquage axial supérieur pour filtrat ou rétentat, et
   - un piquage latéral supérieur pour rétentat ou filtrat,
   l'assemblage comportant au moins :
   - un collecteur inférieur d'alimentation CA,
   - un collecteur supérieur de filtrat ou rétentat CF,
   - et un collecteur latéral supérieur de rétentat ou filtrat
   - les collecteurs CA, CF sont fixés dans un châssis, l'entraxe E entre les axes géométriques des collecteurs CA, CF étant fixe
- un deuxième bloc formé par un système de vannes, le système de vannes étant installé dans un bâti selon une configuration fixée, et
- un troisième bloc formé par un groupe de tuyauteries intermédiaires constituant une interface entre le système de vannes et l'assemblage de modules,
   caractérisé en ce que
   - seule l'interface est à changer lors d'un changement de types de modules de filtration, tandis que le système de vannes et l'assemblage de modules, mis à part le changement de type de modules, restent inchangés,
   - et en ce que le châssis de l'assemblage de modules est prévu pour recevoir au moins deux types de modules à savoir
      ∘ un premier type avec piquage axial supérieur pour le filtrat et piquage latéral pour le rétentat, et
      ∘ un deuxième type avec piquage axial supérieur pour le rétentat et piquage latéral pour le filtrat,
      ∘ le passage d'un type à l'autre provoquant une permutation des fonctions des collecteurs,
   - et en ce que au moins un groupe de tuyauteries intermédiaires associé respectivement à chaque type desdits modules, est prévu pour être mis en place de manière démontable entre l'assemblage de modules et le système de vannes et assurer la permutation des collecteurs selon le type de modules.

Le terme « bloc » désigne une « unité » pouvant être raccordée à, ou séparée d'un autre bloc ou unité.

Le groupe tuyauteries intermédiaires est décliné en autant de groupes que de types différents de modules, chaque déclinaison étant prévue pour un assemblage avec modules du type associé.

L'équipement de filtration de liquide comporte en outre:
- un assemblage de modules de filtration membranaires, chaque module comportant un piquage inférieur, en général pour l'alimentation en liquide à traiter, un piquage supérieur pour filtrat ou rétentat, et un piquage latéral pour rétentat ou filtrat, l'assemblage comportant au moins un collecteur d'alimentation, un collecteur de filtrat et un collecteur de rétentat, fixés dans un châssis distinct des collecteurs,
- un système de vannes pour contrôler les flux de liquide allant vers l'assemblage de modules, et en provenant,
- et un groupe de tuyauteries intermédiaires entre le système de vannes et l'ensemble de modules,
et est caractérisé en ce que :
- le système de vannes est installé dans un bâti selon une configuration fixée,
- le châssis de l'assemblage de modules est prévu pour recevoir au moins deux types de modules à savoir un premier type avec piquage axial supérieur pour le filtrat et piquage latéral pour le rétentat, et un deuxième type avec piquage axial supérieur pour le rétentat et piquage latéral pour le filtrat, le passage d'un type à l'autre provoquant une permutation des fonctions des collecteurs,
- et au moins un groupe de tuyauteries intermédiaires associé respectivement à chaque type de modules, prévu pour être mis en place de manière démontable entre l'assemblage de modules et le système de vannes et assurer la permutation des collecteurs selon le type de modules.

Préférablement, le groupe de tuyauteries intermédiaires ne comporte aucune vanne.

De préférence, l'équipement de filtration de liquide comporte autant de groupes de tuyauteries intermédiaires que de types différents de modules de filtration membranaires.

L'équipement de filtration de liquide peut comporter un assemblage de modules de filtration installés verticalement selon au moins une rangée, les modules de chaque rangée ayant leurs axes verticaux parallèles situés dans un même plan, chaque module comportant en partie inférieure un piquage axial d'alimentation en liquide à traiter, notamment de l'eau, et en partie supérieure, un piquage axial supérieur pour filtrat ou rétentat, et un piquage latéral pour rétentat ou filtrat, ledit assemblage comportant au moins :
- un collecteur inférieur au-dessous des modules, l'axe géométrique de ce collecteur étant situé dans le plan vertical des axes des modules de la rangée, avec tubulures verticales montantes propres à être raccordées aux piquages axiaux d'alimentation,
- un collecteur supérieur, au-dessus des modules, l'axe géométrique de ce collecteur étant situé dans le plan vertical des axes des modules, ce collecteur comportant des tubulures verticales descendantes pour raccordement aux piquages axiaux des modules, l'entraxe étant fixe entre le collecteur inférieur et le collecteur supérieur,
caractérisé en ce que :
- le collecteur inférieur est conçu suffisamment résistant pour constituer le moyen de support des modules de la rangée, dont les piquages inférieurs sont appliqués contre les tubulures montantes,
- les modules de filtration ont des longueurs différentes,
- l'entraxe entre le collecteur inférieur et le collecteur supérieur,
   est déterminé pour permettre de recevoir le module de plus grande longueur,
- et des adaptateurs rectilignes sont prévus pour permettre le montage de modules plus courts et sont disposés en bout des piquages supérieurs coaxialement aux modules et aux tubulures.

De préférence, l'assemblage de modules de filtration membranaires comporte autant de collecteurs d'alimentation inférieurs et de collecteurs supérieurs pour piquages axiaux, que de rangées de modules.

Avantageusement, le collecteur inférieur est prévu pour recevoir une charge de 180 kg par piquage.

Les piquages axiaux des modules peuvent être disposés en appui contre le bout des tubulures de raccordement, l'étanchéité étant réalisée, au niveau de la jonction, à l'aide de bagues d'étanchéité.

On assure un support axial des modules par le collecteur inférieur, ce qui facilite l'interchangeabilité des modules et réduit les coûts de fabrication du châssis de l'assemblage. Le poids intégral du module est repris sur le piquage inférieur qui est lui-même connecté au collecteur d'alimentation, éventuellement avec pièce intermédiaire si une adaptation est nécessaire.

Les pièces d'adaptation sont particulièrement simples puisqu'il s'agit d'éléments rectilignes disposés suivant l'axe géométrique des modules.

Avantageusement, les longueurs des adaptateurs sont prévues pour que l'extrémité supérieure des adaptateurs soit à proximité de l'extrémité inférieure des tubulures lorsque les adaptateurs sont en appui contre les piquages supérieurs, et l'étanchéité de la jonction entre les adaptateurs et les tubulures est réalisée à l'aide d'un manchon coulissant équipé de moyens d'étanchéité interne, le manchon étant en position rétractée sur l'adaptateur pour permettre la mise en place sous la tubulure, puis ce manchon est déplacé vers le haut pour couvrir la jonction et établir l'étanchéité.

L'équipement de filtration comporte autant de déclinaisons de groupes intermédiaires que de types différents de modules, selon lesquels le piquage axial supérieur est prévu pour la sortie du filtrat ou du rétentat, tandis que le piquage latéral supérieur est prévu pour la sortie du rétentat ou du filtrat, chaque déclinaison étant prévue pour un assemblage avec modules d'un type associé.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :
Fig. 1 est une vue en élévation d'une rangée de quatre modules verticaux de longueurs différentes, dans un assemblage selon l'invention.
Fig. 2 est une vue en perspective d'un adaptateur pour changement de diamètre.
Fig. 3 est une vue en perspective d'une partie d'un collecteur inférieur avec tubulure montante.
Fig. 4 est une vue en perspective d'une partie d'un collecteur supérieur avec tubulure descendante.
Fig. 5-8 sont des vues schématiques de différents types de modules.
Fig. 9 est une vue schématique du branchement de deux modules d'un premier type avec sortie axiale du filtrat et sortie latérale du rétentat, selon l'invention.
Fig. 10 est un schéma semblable à celui de Fig. 9 illustrant le branchement avec modules d'un deuxième type à sortie de filtrat latérale et sortie de rétentat axiale.
Fig. 11 est une vue schématique de blocs constituant un équipement selon l'invention.
Fig. 12 est une vue partielle, en perspective éclatée, d'un équipement de filtration selon l'invention, avec un assemblage de modules d'un premier type A et groupe approprié de tuyauteries intermédiaires.
Fig. 13 est une vue en perspective d'une rangée de modules de type A avec les collecteurs horizontaux.
Fig. 14 montre, semblablement à Fig. 12, l'équipement de filtration avec un assemblage de modules d'un deuxième type B, et un groupe approprié de tuyauteries intermédiaires, et
Fig. 15 montre en perspective, semblablement à Fig. 13, une rangée de modules de type B.

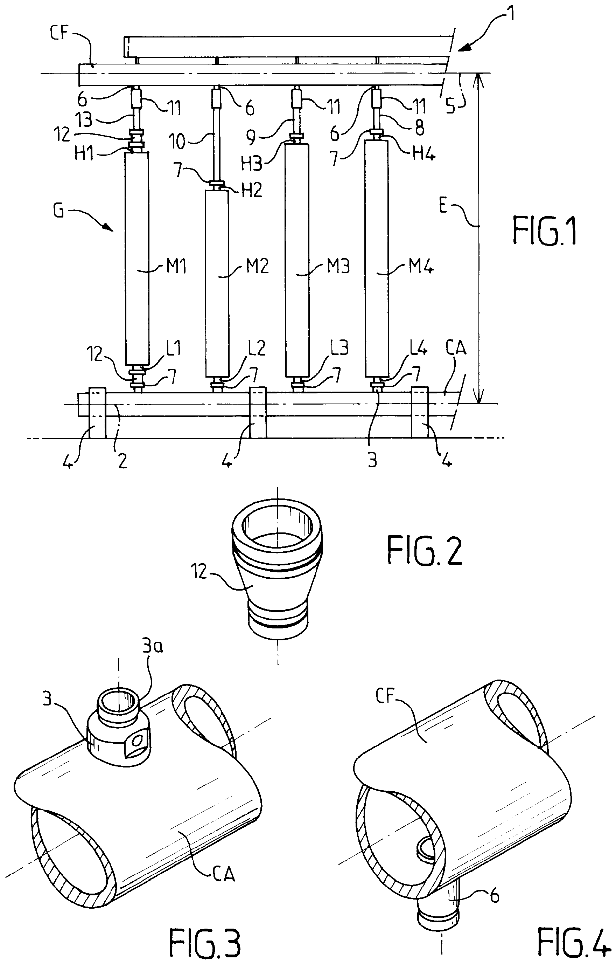

En se reportant à Fig. 1 des dessins, il y'a un assemblage G de modules de filtration membranaires M1, M2, M3, M4 installés verticalement selon au moins une rangée, les modules ayant leurs axes géométriques verticaux parallèles situés dans un même plan. Dans l'exemple considéré, quatre modules sont prévus dans une rangée ; bien entendu, ce nombre peut être différent, notamment supérieur à quatre. Chaque module comporte en partie inférieure un piquage axial L1, L2, L3, L4 d'alimentation en liquide à traiter, notamment en eau, et en partie supérieure un piquage axial supérieur H1, H2, H3, H4 pour filtrat ou rétentat. Un piquage latéral supérieur, non visible sur Fig. 1, est en outre prévu pour rétentat ou filtrat.

L'assemblage comporte au moins un collecteur inférieur d'alimentation CA, un collecteur supérieur de filtrat ou rétentat CF, et un collecteur latéral supérieur de rétentat ou filtrat non visible sur Fig. 1. Les collecteurs CA, CF sont fixés dans un châssis 1, réalisé notamment en tubes et profilés métalliques. L'entraxe E entre les axes géométriques des collecteurs CA, CF est fixe.

Le collecteur inférieur CA peut être légèrement incliné dans le sens favorisant l'écoulement, et son axe géométrique 2 est situé dans le plan vertical des axes géométriques des modules M1-M4 de la rangée. Le collecteur inférieur CA est muni de tubulures verticales montantes 3 propres à être raccordées aux piquages axiaux inférieurs L1-L4. Les tubulures 3 sont de préférence identiques.

Le collecteur inférieur CA est constitué par un tube cylindrique et est prévu suffisamment résistant pour constituer le moyen de support des modules M1-M4 de la rangée. Le poids intégral d'un module est repris par son piquage inférieur L1-L4 qui lui-même est connecté à, et en appui sur, la tubulure 3 du collecteur d'alimentation. Le collecteur CA est prévu pour recevoir une charge de 180 kg par piquage.

Le tube constituant le collecteur CA est maintenu, relativement au châssis 1, par des colliers 4 espacés, situés entre deux tubulures 3.

Le collecteur supérieur CF pour le filtrat ou rétentat peut être légèrement incliné dans le sens favorisant l'écoulement, au-dessus des modules, et son axe géométrique 5 est situé dans le plan vertical des axes géométriques des modules M1-M4, lequel plan contient l'axe géométrique du collecteur inférieur CA. Le collecteur supérieur CF, généralement constitué par un tube cylindrique, comporte des tubulures verticales descendantes 6, identiques, coaxiales aux tubulures 3 du collecteur inférieur.

L'entraxe E entre les collecteurs CA et CF est choisi pour permettre d'accepter les modules ayant la plus grande longueur.

Selon l'exemple de Fig. 1, le module M4 est le plus long, et le module M2 est le moins long. Les modules M1, M3 présentent une longueur intermédiaire. Les piquages inférieurs et supérieurs des modules M2, M3 et M4 ont même diamètre que les tubulures 3 et 6. Par contre, les piquages L1 et H1 du module M1 ont un diamètre supérieur à celui des tubulures 3 et 6.

Le montage des modules M2- M4 entre deux tubulures 3 et 6 associées est réalisé de la manière suivante.

Les piquages L2 - L4 inférieurs sont appliqués bout à bout contre les tubulures 3. Une bague d'étanchéité 7, notamment du type à deux demi-coquilles assemblées pour serrer les piquages et tubulures, est ensuite mise en place autour des piquages L2 - L4 pour recouvrir la jonction des piquages et des tubulures, et établir l'étanchéité.

En partie haute, des adaptateurs 8, 9, 10 formés par des éléments tubulaires rectilignes sont disposés en bout des piquages H4, H3, H2, coaxialement aux modules et aux tubulures 6. Les longueurs des adaptateurs 8, 9, 10 sont prévues pour que l'extrémité supérieure des adaptateurs soit à proximité de l'extrémité inférieure des tubulures 6 lorsque les adaptateurs sont en appui contre les piquages H4, H3, H2. L'étanchéité de la jonction de l'adaptateur et du piquage est réalisée avec une bague 7 semblable à celle des piquages inférieurs. L'étanchéité de la jonction entre les adaptateurs 8, 9, 10 et les tubulures 6 est réalisée à l'aide d'un manchon coulissant 11 équipé de moyens d'étanchéité interne. Le manchon 11 est en position rétractée sur l'adaptateur 8, 9, 10 pour permettre la mise en place sous la tubulure 6, puis ce manchon 11 est déplacé vers le haut pour couvrir la jonction et établir l'étanchéité.

Pour le module M1, dont les piquages L1 et H1 ont un diamètre supérieur à celui des tubulures 3,6, une pièce d'adaptation 12, bien visible sur Fig. 2, assure la réduction de diamètre entre le piquage L1, H1 et les tubulures 3,6. La pièce 12 présente une forme tronconique avec deux portées cylindriques d'extrémité. Un adaptateur rectiligne 13 est prévu en partie haute entre la pièce 12 et la tubulure 6. L'étanchéité des jonctions entre les différentes parties est réalisée comme expliqué précédemment pour les modules M4-M2, avec bague 7 et manchon 11 coulissants, de diamètre approprié.

Un assemblage conforme à l'invention permet la mise en place d'un module de longueur différente de celui qui était prévu initialement. L'adaptation est réalisée par le montage de pièces intermédiaires coaxiales assurant la transmission directe de la charge du module au collecteur inférieur CA, en évitant un déport de charge qui entraînerait un moment de torsion sur le collecteur inférieur CA.

Les pièces en partie basse et haute, dans l'axe du module, sont réalisées avantageusement en matière rigide ou semi-rigide. Les pièces latérales sont réalisées en matière semi-rigide ou souple. Une partie transparente ou translucide peut être ajoutée, en particulier au niveau des adaptateurs 8, 9, 11 ou 13, pour vérifier l'absence de bulles lors d'un test d'intégrité par une méthode de maintien de pression. Les emplacements pour des modules non utilisés sur les collecteurs sont obturés à l'aide de bouchons et de colliers.

Fig. 3 illustre une partie du collecteur inférieur CA avec tubulure 3 pour raccorder le piquage inférieur axial d'un module. Cette tubulure 3 comporte un collet 3a de diamètre réduit autour duquel pourra venir s'engager la bague d'étanchéité 7.

Fig. 4 montre, en perspective, une partie du collecteur supérieur CF, avec tubulure descendante 6.

Le support axial réalisé dans un assemblage selon l'invention facilite l'interchangeabilité des modules et réduit le coût de fabrication du châssis 1.

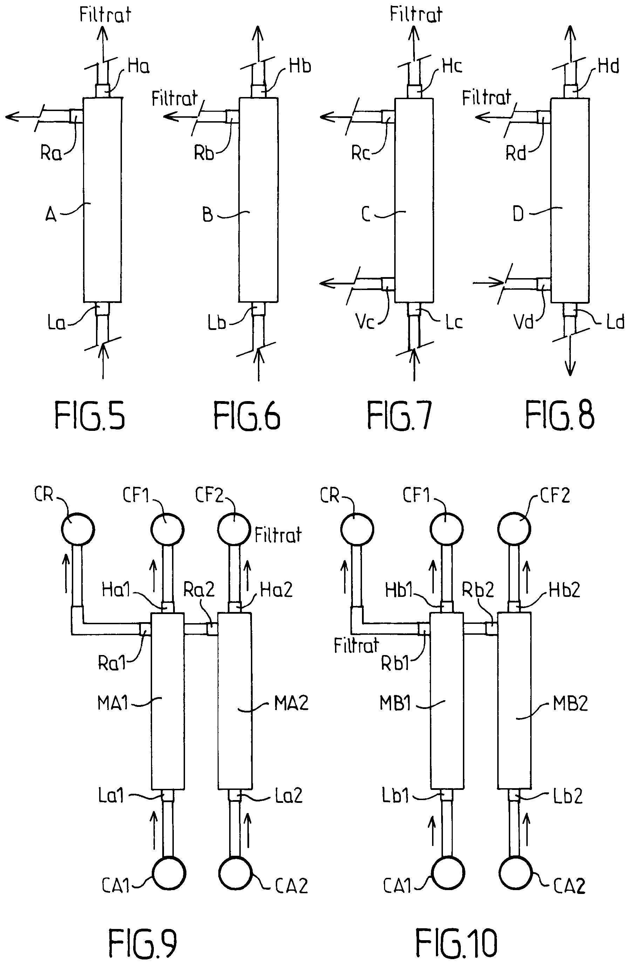

Les modules de filtration membranaires peuvent non seulement avoir des longueurs différentes comme exposé à propos de Fig. 1, mais aussi présenter des piquages disposés différemment, comme illustré sur Fig. 5-8.

Fig. 5 montre un module de type A dans lequel le piquage axial inférieur La est prévu pour l'alimentation en liquide à traiter, le piquage axial supérieur Ha est prévu pour la sortie du filtrat, tandis que le piquage latéral supérieur Ra est prévu pour la sortie du rétentat. Les modules de type A peuvent avoir des tailles à savoir longueur et diamètre différents. Les modules d'un même type A, mais de dimensions différentes, peuvent être assemblés dans une même rangée comme illustré sur Fig. 1.

Fig. 6 montre un module de type B dans lequel le piquage axial inférieur Lb sert à l'alimentation en fluide à traiter, tandis que le piquage axial supérieur Hb sert à l'évacuation du rétentat. Le piquage latéral supérieur Rb sert à la sortie du filtrat. Par rapport à la disposition de Fig. 5, les fonctions des piquages supérieurs Hb, Rb sont permutées.

Fig. 7 illustre un module de type C qui comporte trois piquages Lc, Hc, Rc ayant les mêmes fonctions que pour le module A de Fig. 5, et un quatrième piquage inférieur latéral Vc pour la vidange.

Fig. 8 illustre un autre type D de module dans lequel le piquage axial inférieur Ld est prévu pour la vidange, le piquage axial supérieur Hd est prévu pour la sortie du rétentat et le piquage latéral supérieur Rd est prévu pour la sortie du filtrat. Un piquage latéral inférieur Vd est prévu pour l'alimentation en liquide à filtrer.

Pour montage dans un équipement de filtration selon l'invention, les modules de type C sont ramenés au type A en obturant le piquage inférieur Vc. Les modules de type D sont ramenés au type B en obturant le piquage latéral inférieur Vd et en assurant l'alimentation par le piquage inférieur axial Ld.

Fig. 9 et 10 sont des schémas illustrant la permutation des fonctions des collecteurs supérieurs lors d'un changement de modules de type A (Fig. 9) en modules de type B (Fig. 10).

Selon Fig. 9 deux rangées de modules de type A, perpendiculaires au plan de la figure, sont prévues. Les modules de chaque rangée sont situés en arrière ou en avant des modules MA1 et MA2 représentés. Pour chaque rangée de modules sont prévus :
- pour les piquages inférieurs axiaux, un collecteur inférieur CA1, CA2 perpendiculaire au plan de Fig. 9
- et pour les piquages supérieurs axiaux, un collecteur supérieur CF1, CF2 perpendiculaire au plan de Fig. 9.

Les axes géométriques des collecteurs inférieurs CA1, CA2 et supérieurs CF1, CF2 sont situés dans le plan vertical de chacune des rangées correspondant aux modules MA1, MA2. Un collecteur supérieur latéral CR est en outre prévu. Les collecteurs occupent des positions fixes dans le châssis. Les piquages inférieurs La1, La2 sont raccordés aux collecteurs inférieurs par des conduites axiales verticales. Les piquages supérieurs Ha1 et Ha2 sont également raccordés par des conduites verticales axiales aux collecteurs supérieurs CF1 et CF2 qui recueillent le filtrat. Les piquages latéraux Ra1, Ra2 sont raccordés latéralement aux collecteurs CR qui recueillent le rétentat.

Dans le cas de Fig. 10, où les modules sont du type B, les branchements schématiques restent les mêmes, mais les fonctions des collecteurs CF1,CF2 d'une part et CR d'autre part sont permutées. Le collecteur CR devient collecteur de filtrat et les collecteurs CF1, CF2 deviennent collecteurs de rétentat.

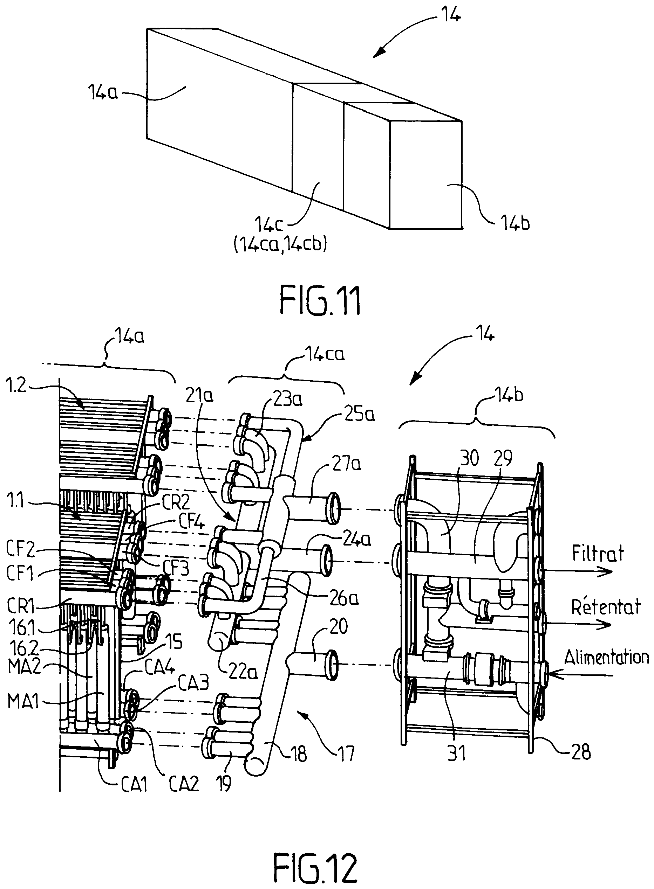

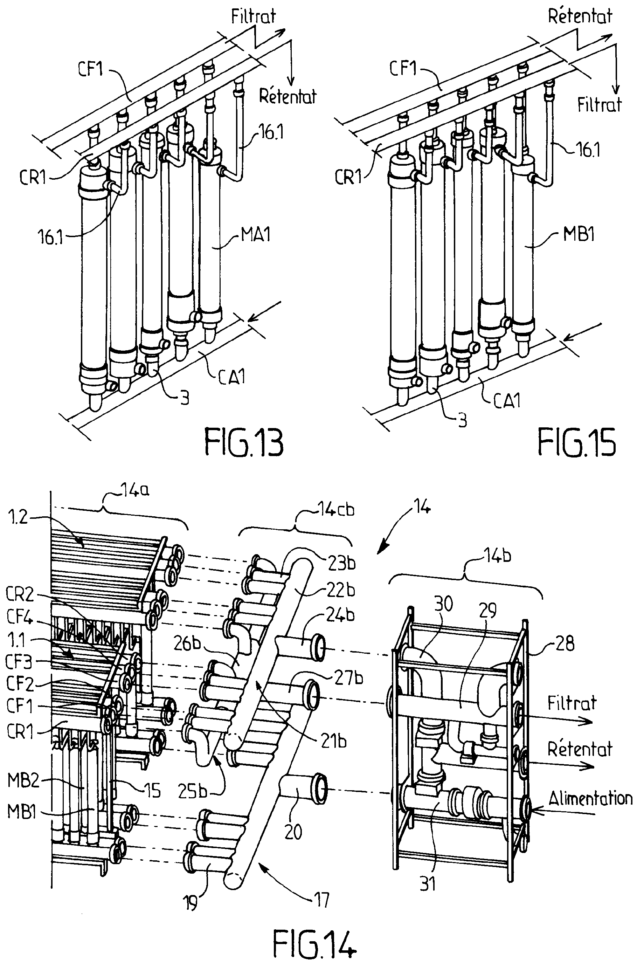

Pour permettre de réaliser cette permutation avec un minimum d'opérations, un équipement 14 de filtration de liquide (Fig. 11) comporte, selon l'invention, un premier bloc formé par un assemblage 14a de modules de filtration membranaires, un deuxième bloc formé par un système de vannes 14b pour contrôler les flux de liquide allant vers l'assemblage et en provenant, et un troisième bloc formé par un groupe de tuyauteries intermédiaires 14c entre le système de vannes 14b et l'assemblage de modules14a. Le groupe 14c est décliné en un groupe 14ca (Fig.12) prévu pour un assemblage avec modules de type A et un groupe 14b (Fig.14) pour un assemblage avec modules de type B. Les déclinaisons 14ca, 14cb du groupe 14c constituent des interfaces, seules à changer lors d'un changement de type de modules. De préférence, les interfaces ne comportent aucune vanne.

La configuration dans l'espace des orifices de raccordement du premier bloc, ou assemblage 14a, reste la même dans l'espace en cas de changement de type de modules. La configuration des orifices de raccordement du deuxième bloc, formé par le système de vannes 14b, reste la même dans l'espace. La configuration dans l'espace des orifices de raccordement des différentes interfaces 14ca, 14cb formées par les troisièmes blocs correspondant aux différents types de modules, reste la même pour venir en regard, respectivement, des orifices des premier et second blocs.

Avantageusement les différents orifices de raccordement des blocs sont situés dans des plans qui, après réunion des différents blocs, sont orthogonaux aux axes géométriques parallèles des modules de filtration.

Fig. 12 illustre en perspective, partiellement éclatée, un équipement de filtration 14 selon l'invention, comportant un assemblage 14a équipé de modules de filtration de type A. Dans l'exemple représenté, l'équipement 14 comporte deux châssis 1.1, 1.2 de composition identique, et dont un seul sera décrit, l'autre s'en déduisant.

Le châssis 1.1 comporte, en partie basse, deux groupes de deux collecteurs d'alimentation CA1, CA2 et CA3, CA4 qui assurent la prise en charge du poids des modules tels que MA1, MA2 de chaque rangée, disposés au-dessus de ces collecteurs. Le plan vertical d'une rangée passe par l'axe géométrique du collecteur associé. Les deux groupes de deux collecteurs sont disposés de part et d'autre d'un plan vertical médiateur du châssis 1.1, plan matérialisé par des montants verticaux 15, par exemple au nombre de trois, prévus aux deux extrémités et au milieu.

Un équipement de filtration selon l'invention est prévu pour permettre d'effectuer facilement et rapidement un changement de modules de type A en modules de type B ou inversement.

Au-dessus de chaque collecteur inférieur CA1-CA4 est disposée, à la verticale, une rangée de modules de type A, MA1, MA2 dont les longueurs et diamètres peuvent être différents. Chaque rangée est disposée relativement au collecteur inférieur comme expliqué à propos de Fig. 1.

Au-dessus des rangées de modules, et à la verticale des collecteurs inférieurs CA1-CA4 sont disposés des collecteurs supérieurs CF1-CF4 dont les axes géométriques sont situés dans les plans verticaux passant par les axes géométriques des collecteurs inférieurs et des modules correspondants. Dans le cas de modules de type A, ces collecteurs CF1-CF4 supérieurs recueillent le filtrat. Les axes géométriques des collecteurs CF1-CF4 sont situés dans un même plan horizontal supérieur, tandis que les axes géométriques des collecteurs inférieurs CA1-CA4 sont situés également dans un même plan horizontal inférieur.

De part et d'autre du groupe de quatre collecteurs supérieurs CF1-CF4, correspondant aux quatre rangées de modules verticaux, sont prévus deux collecteurs latéraux CR1, CR2 parallèles aux collecteurs CF1-CF4, de préférence avec leurs axes géométriques situés dans le même plan que celui des axes des collecteurs CF1-CF4. Les collecteurs latéraux CR1, CR2, dans le cas de modules de type A, recueillent le rétentat. Les piquages latéraux supérieurs des modules MA1 de la première rangée sont reliés à des tubulures descendantes du collecteur latéral CR1 par des canalisations coudées 16.1 comportant une branche horizontale et une branche verticale. De même, les modules MA2 de la deuxième rangée, plus éloignée transversalement que la première rangée du collecteur CR1, sont reliés à ce dernier par des canalisations coudées 16.2 dont la branche horizontale est plus longue que celle des canalisations 16.1. La branche horizontale des canalisations 16.2 passe entre deux modules MA1 de la première rangée. Les branches verticales des canalisations 16.1, 16.2 sont situées dans un même plan vertical passant par l'axe géométrique longitudinal du collecteur CR1. Une disposition similaire est prévue pour les deux autres rangées de modules correspondant aux collecteurs CA3, CA4 et le collecteur latéral CR2.

L'autre assemblage de modules 1.2 est symétrique du premier assemblage 1.1 concernant les différents collecteurs et le châssis, par rapport à un plan vertical médian parallèle aux axes géométriques des collecteurs. Les modules de filtration peuvent être de taille et de dimensions différentes, mais doivent être du même type A que ceux de l'assemblage 1.1.

Les collecteurs inférieurs CA1-CA4 ont les mêmes longueurs et leurs extrémités sont situées dans un même plan vertical, orthogonal à l'axe géométrique de ces collecteurs. Une des extrémités des collecteurs est fermée par un bouchon démontable à savoir l'extrémité (non visible) située sur la gauche de Fig. 12, tandis que l'autre extrémité, située vers la droite selon Fig. 12, est prévue pour être raccordée à une tuyauterie d'alimentation 17 intermédiaire comprenant une canalisation transversale 18, dans le plan des collecteurs inférieurs, munie de quatre groupes de raccords 19 tubulaires qui viennent dans le prolongement des collecteurs inférieurs CA1-CA4 auxquels ils sont reliés de manière étanche par des brides avec joints.

La tuyauterie intermédiaire 17 comporte, du côté opposé aux raccords 19, une tubulure centrale 20, parallèle aux collecteurs CA1-CA4, munie, à son extrémité éloignée du tube transversal 18, d'une bride de raccordement au système de vannes 14b.

Les collecteurs supérieurs CF1-CF4, de même longueur, ont leurs extrémités situées dans un même plan vertical orthogonal aux axes géométriques des collecteurs. Une extrémité, à savoir l'extrémité gauche (non visible) selon Fig. 12, des collecteurs CF1-CF4 est fermée par un bouchon démontable. Les autres extrémités de ces collecteurs CF1-CF4 sont ouvertes pour être raccordées, par des brides, à une tuyauterie intermédiaire 21a comportant un tube transversal 22a fermé à ses extrémités, situé à un niveau inférieur à celui des collecteurs. Le tube 22a est muni, sur sa partie supérieure, d'éléments de raccordement formés par des coudes 23a, à 90°, dont les extrémités ouvertes viennent en regard des extrémités ouvertes des collecteurs CF1-CF4 pour y être raccordées de manière étanche par des brides avec joints. Une canalisation médiane de sortie 24a, parallèle au collecteur supérieur, est prévue pour le raccordement au système de vannes 14b.

Les collecteurs latéraux CR1, CR2 des deux assemblages sont également fermés à leur extrémité gauche (non visible) et ouverts à leur extrémité droite, située de préférence dans un même plan vertical que les extrémités des collecteurs CF1-CF4. Une tuyauterie intermédiaire 25a comportant une partie tubulaire transversale 26a et quatre branchements suivant une direction parallèle aux axes géométriques des collecteurs CR1, CR2 est prévue pour se raccorder, aux extrémités de chacun de ces collecteurs, de manière étanche avec des brides. Une canalisation centrale 27a, parallèle aux collecteurs, est prévue du côté opposé pour raccorder la canalisation transversale 26a au système de vannes 14b.

Le système de vannes 14b comporte un bâti 28 dans lequel sont montés selon une configuration déterminée, et fixée :
- une tubulure 29 avec vanne et raccord pour le filtrat ;
- une tubulure 30 coudée verticalement vers le bas, avec vanne et raccord pour le rétentat ;
- une tubulure 31, avec vanne et raccord, de préférence rectiligne, pour l'alimentation.

Les orifices de ces tubulures situés du côté de l'assemblage 14a occupent une position déterminée dans l'espace, fixée par le montage sur le bâti 28, de même que les orifices de sortie situés du côté opposé.

La canalisation 24a de filtrat se raccorde à la tubulure 29 ; la canalisation 27a de rétentat se raccorde à la tubulure 30, tandis que la tubulure 20 d'alimentation se raccorde à la tubulure 31.

Fig. 13 illustre, en perspective, avec un nombre limité de modules, une rangée de l'équipement 14a de Fig. 12. Les divers éléments de Fig. 13 déjà décrits sont désignés par les mêmes références numériques que celles utilisées précédemment, sans que la description soit reprise.

Fig. 14 montre, semblablement à Fig. 12, l'équipement de filtration avec un assemblage 14a dans lequel sont installés des modules de filtration MB1, MB2... de type B. Les châssis 1.1, 1.2 sont les mêmes et les collecteurs CA1-CA4, CF1-CF4, CR1, CR2 n'ont pas changé de position.

Par contre, la fonction des collecteurs supérieurs CF1-CF4 et des collecteurs latéraux CR1-CR2 est permutée. Les collecteurs latéraux CR1, CR2, reliés aux piquages latéraux des modules, reçoivent le filtrat, tandis que les collecteurs supérieurs axiaux CF1-CF4 reliés aux piquages de sortie axiaux des modules recueillent le rétentat.

Le groupe 14cb de tuyauteries intermédiaires est prévu pour raccorder les extrémités des collecteurs aux orifices appropriés du système de vannes 14b, qui n'ont pas changé de position.

La tuyauterie intermédiaire 22b, 24b raccorde les extrémités des collecteurs supérieurs axiaux CF1-CF4 à l'orifice d'entrée de la conduite 30b du rétentat dans le système de vannes 14b. La tuyauterie intermédiaire 25b, 27b raccorde les extrémités des collecteurs latéraux CR1, CR2 à l'orifice de la conduite 29 de filtrat, dans le système de vannes 14b. La tuyauterie transversale 17 pour les collecteurs d'alimentation n'a pas été modifiée.

Fig. 15 illustre, semblablement à Fig. 13 une rangée de quatre modules de type B.

Selon l'invention, l'équipement de filtration peut accueillir au moins deux types de modules de filtration A, B différents. L'interchangeabilité des modules est particulièrement simple et rapide, notamment grâce au support des modules par les collecteurs inférieurs et à la permutation réalisée par changement des groupes 14ca, 14cb de tuyauteries intermédiaires.

## Revendications

1. Équipement de filtration de liquide, notamment d'eau, comportant des modules de filtration membranaires, installés verticalement selon au moins une rangée, les modules ayant leurs axes géométriques verticaux parallèles situés dans un même plan, lesdits modules étant reliés par des tuyauteries à des vannes pour contrôler les flux de liquide allant vers les modules et en provenant,
l'équipement de filtration de liquide comprenant
- un premier bloc formé par un assemblage (14a) de modules de filtration membranaires, chaque module comportant :
• un piquage axial inférieur pour l'alimentation en liquide à traiter (L1-L4),
• un piquage axial supérieur pour filtrat ou rétentat (H1-H4), et
• un piquage latéral supérieur pour rétentat ou filtrat,
l'assemblage comportant au moins :
• un collecteur inférieur d'alimentation CA,
• un collecteur supérieur de filtrat ou rétentat CF,
• et un collecteur latéral supérieur de rétentat ou filtrat
• les collecteurs CA, CF sont fixés dans un châssis 1, l'entraxe E entre les axes géométriques des collecteurs CA, CF étant fixe
- un deuxième bloc formé par un système de vannes (14b), le système de vannes étant installé dans un bâti selon une configuration fixée, et
- un troisième bloc formé par un groupe de tuyauteries intermédiaires (14c) constituant une interface entre le système de vannes (14b) et l'assemblage de modules (14),
**caractérisé en ce que** :
- seule l'interface est à changer lors d'un changement de types de modules de filtration, tandis que le système de vannes (14b) et l'assemblage de modules (14a), mis à part le changement de type de modules, restent inchangés,
- et **en ce que** le châssis de l'assemblage de modules est prévu pour recevoir au moins deux types de modules à savoir
- un premier type avec piquage axial supérieur pour le filtrat et piquage latéral pour le rétentat, et
- un deuxième type avec piquage axial supérieur pour le rétentat et piquage latéral pour le filtrat,
- le passage d'un type à l'autre provoquant une permutation des fonctions des collecteurs,
- et **en ce que** au moins un groupe de tuyauteries intermédiaires associé respectivement à chaque type desdits modules, est prévu pour être mis en place de manière démontable entre l'assemblage de modules et le système de vannes et assurer la permutation des collecteurs selon le type de modules.

2. Équipement de filtration de liquide selon la revendication 1, **caractérisé en ce que** :
- ledit collecteur inférieur (CA) étant au-dessous des modules (M1-M4), l'axe géométrique (2) dudit collecteur inférieur étant situé dans le plan vertical des axes des modules de la rangée, avec tubulures verticales montantes (3) propres à être raccordées aux piquages axiaux inférieurs d'alimentation (L1-L4),
- ledit collecteur supérieur (CF) étant au-dessus des modules, l'axe géométrique (5) dudit collecteur supérieur étant situé dans le plan vertical des axes des modules, ledit collecteur supérieur comportant des tubulures verticales descendantes (6) pour raccordement aux piquages axiaux supérieurs (H1-H4) des modules,
- le collecteur inférieur (CA) étant conçu suffisamment résistant pour constituer le moyen de support des modules de la rangée, dont les piquages inférieurs (L1-L4) sont appliqués contre les tubulures montantes (3),
- les modules de filtration (M1-M4) ont des longueurs différentes,
- l'entraxe (E) entre le collecteur inférieur (CA) et le collecteur supérieur (CF), est déterminé pour permettre de recevoir le module de plus grande longueur,
- et des adaptateurs rectilignes (8, 9, 10, 13) sont prévus pour permettre le montage de modules plus courts et étant disposés en bout des piquages supérieurs (H4, H3, H2, H1) coaxialement aux modules et aux tubulures descendantes (6).

3. Équipement de filtration selon la revendication 2, **caractérisé en ce que** le collecteur inférieur (CA) est prévu pour recevoir une charge de 180 kg par piquage axial (L1-L4).

4. Équipement de filtration selon l'une quelconque des revendications 1 à 3, **caractérisé en ce que** les piquages axiaux inférieurs d'alimentation (L1-L4) des modules sont disposés en appui contre le bout des tubulures (3) de raccordement, l'étanchéité étant réalisée, au niveau de la jonction, à l'aide de bagues d'étanchéité (7).

5. Équipement de filtration selon la revendication 2, **caractérisé en ce que** les longueurs des adaptateurs (8, 9, 10,13) sont prévues pour que l'extrémité supérieure des adaptateurs soit à proximité de l'extrémité inférieure des tubulures verticales descendantes (6), lorsque les adaptateurs sont en appui contre les piquages supérieurs (H4, H3, H2, H1), et l'étanchéité de la jonction entre les adaptateurs (8, 9, 10,13) et les tubulures verticales descendantes (6), est réalisée à l'aide d'un manchon coulissant (11) équipé de moyens d'étanchéité interne, le manchon coulissant (11) étant configuré pour être en position rétractée sur l'adaptateur (8, 9, 10,13) et permettre la mise en place sous la tubulure verticale descendante (6), puis ce manchon coulissant (11) étant configuré pour être déplacé vers le haut et couvrir la jonction et établir l'étanchéité.

6. Équipement de filtration de liquide selon la revendication 1, **caractérisé en ce que** le groupe de tuyauteries intermédiaires (14c) ne comporte aucune vanne.

## Patentansprüche

1. Filtriervorrichtung für Flüssigkeiten, insbesondere Wasser, mit Membranfiltermodulen, die vertikal in mindestens einer Reihe angeordnet sind, wobei die parallelen vertikalen geometrischen Achsen der Module in derselben Ebene angeordnet sind, wobei die Module durch Rohrleitungen mit Ventilen verbunden sind, um die zu und aus den Modulen fließenden Flüssigkeitsströme zu regeln,
wobei die Filtriervorrichtung umfasst:
- einen ersten Block, der durch eine Baugruppe (14a) von Membranfiltermodulen gebildet ist, wobei jedes Modul aufweist:
• einen unteren axialen Anschluss zur Zuleitung von zu behandelnder Flüssigkeit (L1-L4),
• einen oberen axialen Anschluss für Filtrat oder Retentat (H1-H4), und
• einen oberen seitlichen Anschluss für Retentat oder Filtrat,
wobei die Baugruppe mindestens aufweist:
• einen unteren Zuleitungssammler CA,
• einen oberen Filtrat- oder Retentatsammler CF,
• und einen oberen seitlichen Retentat- oder Filtratsammler,
• wobei die Sammler CA, CF in einem Rahmen (1) befestigt sind, wobei der Achsabstand E zwischen den geometrischen Achsen der Sammler CA, CF fest ist,
- einen zweiten Block, der durch ein Ventilsystem (14b) gebildet ist, wobei das Ventilsystem in einer festgelegten Konfiguration in einem Gestell eingebaut ist, und
- einen dritten Block, der durch eine Gruppe von Zwischenrohrleitungen (14c) gebildet ist, welche eine Schnittstelle zwischen dem Ventilsystem (14b) und der Modulbaugruppe (14) bilden,
**dadurch gekennzeichnet, dass**,
- bei einem Wechsel von Filtermodultypen lediglich die Schnittstelle ausgetauscht werden muss, während das Ventilsystem (14b) und die Modulbaugruppe (14a) abgesehen von dem Wechsel des Modultyps unverändert bleiben,
- und dass der Rahmen der Modulbaugruppe zum Aufnehmen mindestens zweier Modultypen vorgesehen ist, nämlich
- eines ersten Typs mit oberem axialem Anschluss für das Filtrat und seitlichem Anschluss für das Retentat, und
- eines zweiten Typs mit oberem axialem Anschluss für das Retentat und seitlichem Anschluss für das Filtrat,
- wobei der Übergang von einem Typ zum anderen eine Permutation der Funktionen der Sammler bewirkt,
- und dass mindestens eine Gruppe von Zwischenrohrleitungen, die jeweils jedem Typ der Module zugeordnet sind, vorgesehen ist, um demontierbar zwischen der Modulbaugruppe und dem Ventilsystem platziert zu werden und die Permutation der Sammler entsprechend dem Modultyp zu gewährleisten.

2. Filtriervorrichtung für Flüssigkeiten nach Anspruch 1, **dadurch gekennzeichnet, dass**:
- der untere Sammler (CA) unter den Modulen (M1-M4) angeordnet ist, wobei die geometrische Achse (2) des unteren Sammlers in der vertikalen Ebene der Achsen der Module der Reihe liegt, wobei aufragende vertikale Rohrstutzen (3) vorgesehen sind, die zum Anschließen an die unteren axialen Zuleitungsanschlüsse (L1-L4) geeignet sind,
- der über den Modulen angeordnete obere Sammler (CF), wobei die geometrische Achse (5) des oberen Sammlers in der vertikalen Ebene der Achsen der Module liegt, wobei der obere Sammler nach unten ragende vertikale Rohrstutzen (6) zum Anschließen an die oberen axialen Anschlüsse (H1-H4) der Module aufweist,
- der untere Sammler (CA) ausreichend widerstandsfähig ausgelegt ist, um die Stützeinrichtung für die Module der Reihe zu bilden, deren Anschlüsse (L1-L4) gegen die aufragenden Rohrstutzen (3) angesetzt sind,
- die Filtermodule (M1-M4) unterschiedliche Längen aufweisen,
- der Achsabstand (E) zwischen dem unteren Sammler (CA) und dem oberen Sammler (CF) gewählt ist, um das Aufnehmen des Moduls mit der größten Länge zu ermöglichen,
- und dass gerade Adapter (8, 9, 10, 13) vorgesehen sind, um die Montage kürzerer Module zu ermöglichen, und am Ende der oberen Anschlüsse (H4, H3, H2, H1) koaxial zu den Modulen und zu den nach unten ragenden Rohrstutzen (6) angeordnet sind.

3. Filtriervorrichtung für Flüssigkeiten nach Anspruch 2, **dadurch gekennzeichnet, dass** der untere Sammler (CA) zum Aufnehmen einer Last von 180 kg pro axialem Anschluss (L1-L4) vorgesehen ist.

4. Filtriervorrichtung für Flüssigkeiten nach einem der Ansprüche 1 bis 3, **dadurch gekennzeichnet, dass** die unteren axialen Zuleitungsanschlüsse (L1-L4) der Module gegen das Ende der Verbindungsrohrstutzen (3) angesetzt angeordnet sind, wobei die Dichtheit an der Verbindung mittels Dichtringen (7) erreicht ist.

5. Filtriervorrichtung für Flüssigkeiten nach Anspruch 2, **dadurch gekennzeichnet, dass** die Längen der Adapter (8, 9, 10, 13) dazu vorgesehen sind, dass das obere Ende der Adapter dem unteren Ende der nach unten ragenden vertikalen Rohrstutzen (6) nahe ist, wenn die Adapter gegen die oberen Anschlüsse (H4, H3, H2, H1) angesetzt sind, und die Dichtheit der Verbindung zwischen den Adaptern (8, 9, 10, 13) und den nach unten ragenden vertikalen Rohrstutzen (6) mittels einer Schiebemuffe (11) erreicht ist, die mit inneren Dichtungseinrichtungen versehen ist, wobei die Schiebemuffe (11) dazu ausgebildet ist, in der zurückgezogenen Position auf dem Adapter (8, 9, 10, 13) zu sein und das Anbringen unter dem nach unten ragenden vertikalen Rohrstutzen (6) zu ermöglichen, wobei die Schiebemuffe (11) ferner dazu ausgebildet ist, nach oben verschoben zu werden und die Verbindung abzudecken und die Dichtheit herzustellen.

6. Filtriervorrichtung für Flüssigkeiten nach Anspruch 1, **dadurch gekennzeichnet, dass** die Zwischenrohrverbindungen (14c) kein Ventil aufweisen.

## Claims

1. A liquid filtering equipment, in particular water, comprising membrane filtering modules, vertically arranged in at least one row, the modules having their parallel vertical centre lines located in a same plane, said modules being connected by pipings to valves for controlling the liquid flows to and from the modules,
the liquid filtering equipment comprising
- a first block formed by an assembly (14a) of membrane filtering modules, each module including:
• a lower axial tap for feeding the liquid to be treated (L1-L4),
• an upper axial tap for filtrate or retentate (H1-H4), and
• an upper side tap for retentate or filtrate,
the assembly including at least:
• a feed lower collector CA,
• a filtrate or retentate upper collector CF,
• and a retentate or filtrate upper side collector
• the collectors CA, CF are attached in a frame 1, the centre-to-centre spacing E between the centre lines of the collectors CA, CF being fixed
- a second block formed by a system of valves (14b), the system of valves being arranged in a framework in a fixed configuration, and
- a third block formed by a group of intermediate pipings (14c) making up an interface between the system of valves (14b) and the assembly of modules (14),
**characterised in that**:
- only the interface is to be changed upon changing types of filtering modules, whereas the system of valves (14b) and the assembly of modules (14a), apart from changing the type of modules, remain unchanged,
- and **in that** the frame of the assembly of modules is adapted to receive at least two types of modules namely
- a first type with an upper axial tap for the filtrate and a side tap for the retentate, and
- a second type with an upper axial tap for the retentate and a side tap for the filtrate,
- switching from one type to the other causing a changeover of the functions of the collectors,
- and **in that** at least one group of intermediate pipings associated with each type of said modules respectively, is provided to be placed in a dismountable manner between the assembly of modules and the system of valves and ensure changeover of the collectors according to the type of modules.

2. The liquid filtering equipment according to claim 1, **characterised in that**:
- said lower collector (CA) being below the modules (M1-M4), the centre line (2) of said lower collector is located in the vertical plane of the axes of the modules of the row, with upwardly directed vertical tubings (3) able to be connected to the feed lower axial taps (L1-L4),
- said upper collector (CF) being above the modules, the centre line (5) of said upper collector is located in the vertical plane of the axes of the modules, said upper collector including downwardly directed vertical tubings (6) for connecting to the upper axial taps (H1-H4) of the modules,
- the lower collector (CA) being designed sufficiently resistant to make up the means for supporting the modules of the row, the lower taps (L1-L4) of which are applied against the upwardly directed tubings (3),
- the filtering modules (M1-M4) have different lengths,
- the centre-to-centre spacing (E) between the lower collector (CA) and the upper collector (CF) is determined to enable the module with the greater length to be received,
- and rectilinear adapters (8, 9, 10, 13) are provided to enable shorter modules to be mounted and being disposed at the end of the upper taps (H4, H3, H2, H1) coaxially with the modules and with the downwardly directed tubings (6).

3. The filtering equipment according to claim 2, **characterised in that** the lower collector (CA) is provided to receive a 180kg load per axial tap (L1-L4).

4. The filtering equipment according to any of claims 1 to 3, **characterised in that** the feed lower axial taps (L1-L4) of the modules are disposed abutting against the end of the connecting tubings (3), sealing being achieved, at the junction, using seal rings (7).

5. The filtering equipment according to claim 2, **characterised in that** the lengths of the adapters (8, 9, 10, 13) are adapted such that the upper end of the adapters is in the proximity of the lower end of the downwardly directed vertical tubings (6), when the adapters abut against the upper taps (H4, H3, H2, H1), and sealing of the junction between the adapters (8, 9, 10, 13) and the downwardly directed vertical tubings (6), is made using a sliding coupling (11) equipped with inner sealing means, the sliding coupling (11) being configured to be in a retracted position on the adapter (8, 9, 10, 13) and enable placement under the downwardly directed vertical tubing (6), and then this sliding coupling (11) being configured to be upwardly moved and cover the junction and provide sealing.

6. The liquid filtering equipment according to claim 1, **characterised in that** the group of intermediate pipings (14c) includes no valve.
